# EUROPEAN PATENT APPLICATION

(11) **EP 1 918 739 A2**
(43) Date of publication of application: **07.05.2008**
(21) Application number: 07021451.5
(22) Date of filing: 05.11.2007
(51) Int. Cl.: G02B 3/00

(54) **Optical lens plate, backlight unit, and display device**

(30) Priority: 06.11.2006 KR 20060108809
(71) Applicant: Samsung Electronics Co., Ltd., Yeongtong-gu Suwon-city, Gyeonggi-do 442-742 (KR)
(72) Inventor: Yoon, Ju-Young, Seoul (KR); Hwang, Seong-Yong, Seongnam-si Gyeonggi-do (KR); Kim, Gi-Cherl, Giheung-gu Yongin-si (KR)
(74) Representative: Dr. Weitzel & Partner

(57) **Abstract**

The present invention provides an optical lens plate, a backlight unit having the same, and a display device having the same, The optical lens plate includes a transparent plate, a plurality of optical lenses, and a plate fixing means, Each optical lens has an inner curved surface formed in a lower portion of the plate and an outer curved surface formed in an upper portion of the plate, wherein light enters the lens through the inner curved surface and is emitted from the outer curved surface and the plate fixing means fixes the plate.

## Description

### CROSS-REFERENCE TO RELATED APPLICATION

This application claims priority from and the benefit of Korean Patent Application No. 10-2006-108809, filed on November 6, 2006, which is hereby incorporated by reference for all purposes as if fully set forth herein.

### BACKGROUND OF THE INVENTION

### FIELD OF THE INVENTION

The present invention relates to an optical lens plate that may have a wide irradiation angle and be easy to fabricate and assemble due to its reduced size, a backlight unit having the same, and a display device having the same.

### DESCRIPTION OF THE BACKGROUND

A display device converts data in electronic format, which is processed in an information processor into a visible image and displays the image. Display devices include a cathode ray tube ("CRT"), a plasma display panel ("PDP"), a liquid crystal display ("LCD"), and an electroluminescence ("EL") display. Of these, the LCD device is a flat panel display device that displays an image using the electro-optical characteristics of liquid crystals. The LCD device is widely used in various industrial fields because it is lightweight and has a low driving voltage and low power consumption,

The LCD device is not a self-emitting device. Hence, it may require a light source. The typical LCD device uses a light source, such as a cold cathode fluorescent lamp ("CCFL") or a flat fluorescent lamp ("FFL"), which generates white light. Recently, in order to reduce power consumption and improve color gamut, attempts have been made to use red, green, and blue point light sources as a light source of an LCD device. The point light source is usually a light emitting diode ("LED"). Single color light generated from the red, green, or blue point light source is matched with a corresponding color filter of a liquid crystal panel, thereby improving the color gamut.

However, such point light sources have a limited irradiation angle. The irradiation angle is the angle at which light is irradiated. In order to obtain uniform brightness over a wide area, a large number of point light sources are needed. This not only leads to high manufacturing costs, but also increases the thickness of a backlight unit and display device. Also, the structure of the backlight unit becomes more complicated.

### SUMMARY OF THE INVENTION

This invention provides an optical lens plate that may have a wide irradiation angle and be easy to fabricate and assemble due to its reduced size, a backlight unit having the optical lens plate, and a display device having the optical lens plate.

Additional features of the invention will be set forth in the description which follows, and in part will be apparent from the description, or may be learned by practice of the invention.

The present invention discloses an optical lens plate including a transparent plate, a plurality of optical lenses, and a fixing means which fixes the plate to a supporter. Each optical lens has an inner curved surface formed in a lower portion of the plate and an outer curved surface formed in an upper portion of the plate. Light enters the lens through the inner curved surface and is emitted from the outer curved surface. The plate fixing means fixes the plate.

The present invention also discloses a backlight unit including a light source substrate, a plurality of light sources disposed on the light source substrate, a diffusing plate arranged above the light source substrate to diffuse light emitted from the light sources, an optical lens plate arranged between the light source substrate and the diffusing plate. The optical lens plate includes a plurality of optical lenses and each optical lens has an inner curved surface to which light emitted from the light source is input and an outer curved surface from which light is output, and a plate fixing means which fixes the plate to a supporting member.

The present invention also discloses a display device including a backlight unit and a display panel to display an image using light supplied from the backlight unit. The backlight unit includes a light source substrate, a plurality of light sources disposed on the light source substrate, a diffusing plate arranged above the light source substrate to diffuse light emitted from the light sources, an optical lens plate arranged between the light source substrate and the diffusing plate, and a plate fixing means which fixes the optical lens plate to the light source substrate. The optical lens plate includes a plurality of optical lenses and each optical lens has an inner curved surface to which light emitted from the light source is input and an outer curved surface from which light is output. The inner curved surface and the outer curved surface each have an ellipse shape, and a major axis of the inner curved surface is substantially perpendicular to a major axis of the outer curved surface.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention, are incorporated in and constitute a part of this specification, illustrate embodiments of the invention, and together with the description serve to explain the principles of the invention.

FIG. 1 is a plan view showing an optical lens plate according to an exemplary embodiment of the present invention.

FIG. 2 is a cross-sectional view taken along line I-I' of FIG. 1,

FIG. 3 is a partial cross-sectional view showing one optical lens according to an exemplary embodiment of the present invention.

FIG. 4 is a cross-sectional view showing light diffused by the optical lens plate of FIG. 1.

FIG. 5 is a view when seeing one point light source from the top through the optical lens plate of FIG. I which is arranged above the point light source.

FIG. 6 is a cross-sectional view taken along line II-II' of FIG. 1.

FIG. 7 is a cross-sectional view showing a fixing clip as a plate fixing means according to an exemplary embodiment of the present invention.

FIG. 8 is a cross-sectional view showing a fixing screw as a plate fixing means according to another exemplary embodiment of the present invention.

FIG. 9 is a cross-sectional view showing a backlight unit according to an exemplary embodiment of the present invention.

FIG. 10 is a cross-sectional view showing a light source substrate according to an exemplary embodiment of the present invention.

FIG. 11 is a plan view showing various shapes of an optical lens plate according to an exemplary embodiment of the present invention.

FIG. 12 is a cross-sectional view showing a structure in which the optical lens plate having the fixing clip is mounted to the light source substrate.

FIG. 13 is a cross-sectional view showing a structure in which the optical lens plate having the fixing screw is mounted to the light source substrate.

FIG. 14 is a cross-sectional view showing a structure in which the optical lens plate directly contacts the light source substrate.

FIG. 15 is a cross-sectional view showing the backlight unit having the optical lens plate fixed by a diffusing plate supporting member.

FIG. 16 is an enlarged view of a part 'A' shown in FIG. 15.

FIG. 17 is an exploded perspective view showing a display device according to an exemplary embodiment of the present invention.

FIG. 18 is a cross-sectional view taken along line III- III' of FIG. 17.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative size of layers and regions may be exaggerated for clarity. Like reference numerals in the drawings denote like elements.

It will be understood that when an element such as a layer, film, region or substrate is referred to as being "on" or "connected to" another element or layer, it can be directly on, directly connected to, or directly coupled to the other element or layer, or intervening elements or layers may also be present. In contrast, when an element is referred to as being "directly on" or "directly connected to" another element or layer, there are no intervening elements or layers present.

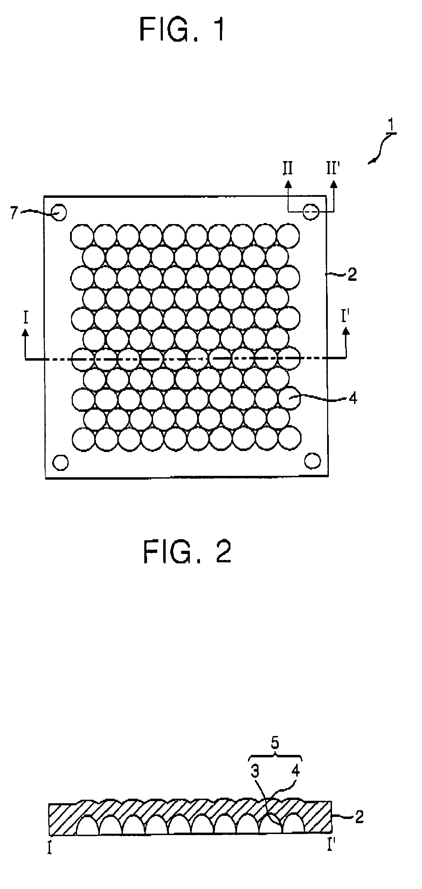

An optical lens plate according to an exemplary embodiment of the present invention is described below with reference to FIG, 1, FIG. 2, FIG. 3, FIG. 4, FIG. 5, FIG. 6, FIG. 7, and FIG. 8.

FIG. 1 is a plan view showing an optical lens plate 1 according to an exemplary embodiment of the present invention, and FIG. 2 is a cross-sectional view taken along line I-I' of FIG. 1.

Referring to FIG. 1 and FIG. 2, the optical lens plate 1 includes a plate 2 of a predetermined shape and a plurality of optical lenses 5. Each optical lens 5 includes an inner curved surface 3 formed in a lower portion of the plate 2 and an outer curved surface 4 formed in an upper portion of the plate 2. Light enters the lens through the inner curved surface 3 and is emitted through the outer curved surface 4. The optical lenses 5 may be regularly arranged or may be randomly arranged. Also, adjacent optical lenses 5 may contact each other as shown in FIG. I or may be spaced apart from each other.

The optical lens plate 1 may have a fixing hole 7 at an edge thereof. The fixing hole 7 provides a space into which a supporting member to fix the optical lens plate 1 may be inserted.

The inner and outer curved surfaces 3 and 4 of the optical lens 5 may each be shaped like a part of an ellipse as shown in FIG. 2. An ellipse is defined as a plane curve wherein the sums of the distances of each point in the periphery of the curve from two apexes are equal. An axis passing through the two apexes is referred to as a major axis, and an axis which is perpendicular to the major axis while passing through a center of the ellipse is referred to as a minor axis. Thus, the major axis is longer than the minor axis. An ellipsoid may be obtained by rotating the ellipse centering on the major or minor axis,

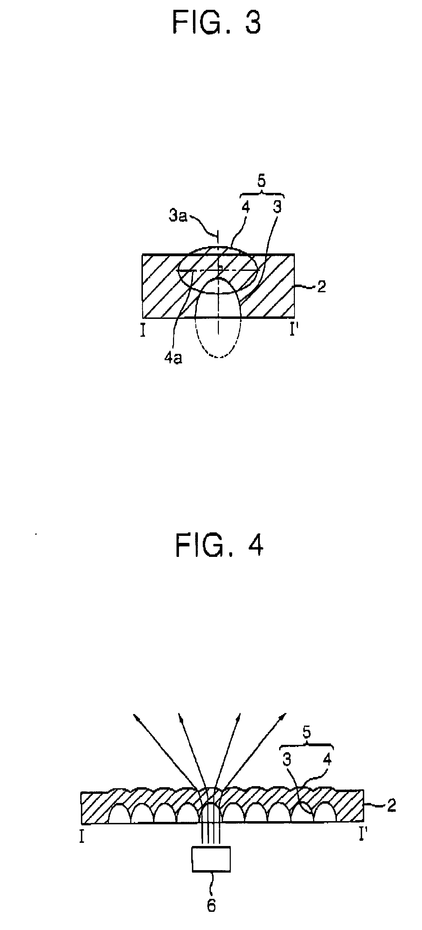

FIG. 3 is a partial cross-sectional view showing one optical lens according to an exemplary embodiment of the present invention. A major axis 3a of the inner curved surface 3 is substantially perpendicular to a major axis 4a of the outer curved surface 4. In a case where the major axis 3a of the inner curved surface 3 is substantially perpendicular to the major axis 4a of the outer curved surface 4, the thickness of the optical lens 5, i.e., the distance between the inner curved surface 3 and the outer curved surface 4 varies according to a location. Thus, light passing through the optical lens 5 has a path depending on a location due to a thickness difference of the optical lens 5. As a result, light emitted from a light source may be more diffused or may be more concentrated on a central portion of the optical lens 5.

The major axis 3a of the inner curved surface 3 may be substantially perpendicular to the plate 2 and the major axis 4a of the outer curved surface 4 is substantially parallel to the plate 2. In this instance, as shown in FIG. 4, light passing through the optical lens 5 is more diffused, and thereby an irradiation angle of light may be widened.

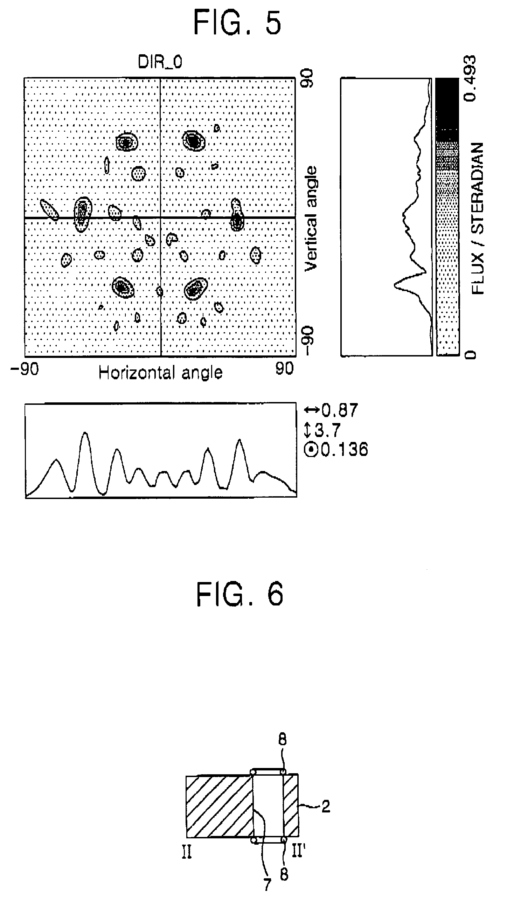

The optical lens plate 1 having the above-described structure diffuses light emitted from one point light source 6, so that the one point light source looks like several point light sources as shown in FIG. 5. FIG. 5 is a view when seeing one point light source from the top through the optical lens plate 1, which is arranged above the point light source.

FIG. 6 is a cross-sectional view taken along line II-II' of FIG. 1. Up-down movement preventing members 8 are arranged on both upper and lower opening portions of the fixing hole 7. The up-down movement preventing members 8 serve to prevent the optical lens plate 1 fixed by the supporting members from moving in a column direction. The up-down movement preventing members 8 may be made of an elastic material because it is efficient to assemble and fix the optical lens plate 1.

The optical lens plate 1 may further include a plate fixing means to fix itself. In this specification, two plate fixing means are suggested.

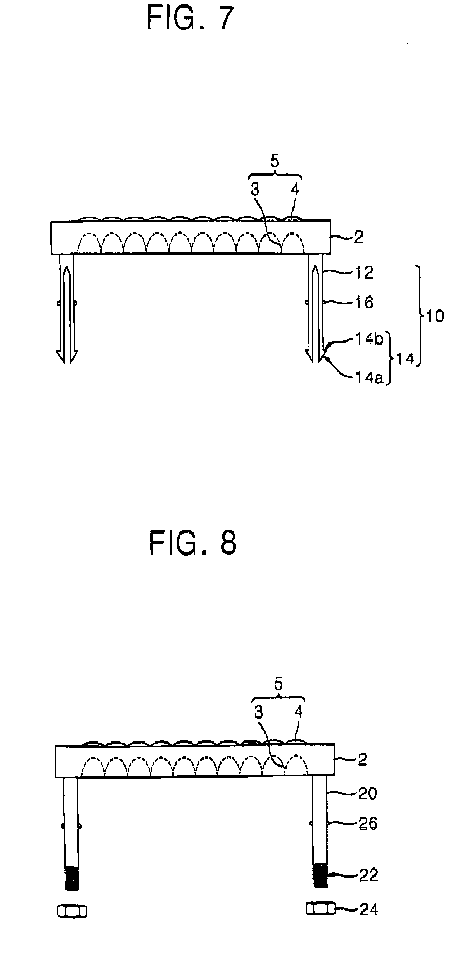

In one exemplary embodiment, the optical lens plate 1 has a fixing clip as the plate fixing means. FIG. 7 is a cross-sectional view showing the fixing clip according to an exemplary embodiment of the present invention, A plurality of fixing clips 10 are arranged on a bottom of the optical lens plate 1 like a plurality of table legs.

In more detail, the fixing clip 10 includes a leg 12 and a separation preventing member 14. The leg 12 may be branched into at least two portions that are spaced apart from each other by a predetermined distance, as shown in FIG. 7. The leg 12 may be made of an elastic material. Thus, even though the leg 12 may be bent by external force, the leg 12 may easily recover when the external force is removed.

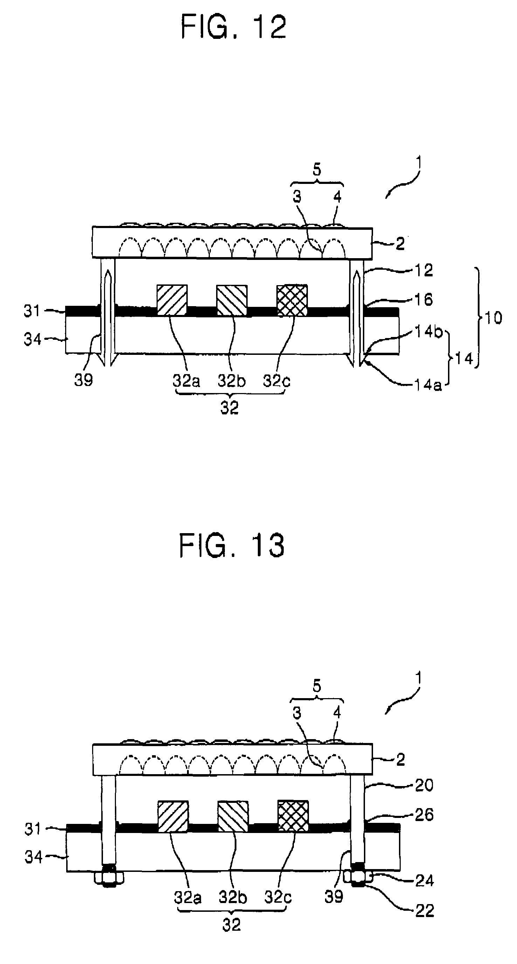

The separation preventing member 14 is formed at an end of the leg 12. The separation preventing member 14 serves to prevent the fixing clip 10 from being separated from a light source substrate 34, as shown in FIG. 12. To this end, the separation preventing member 14 has an oblique surface 14a and a horizontal surface 14b. The oblique surface 14a is downwardly oblique. Due to the oblique surface 14a, the fixing clip 10 may be easily inserted into an inserting hole 39 in the light source substrate 34. The horizontal surface 14b is formed to be horizontally connected to the top portion of the oblique surface 14a. The horizontal surface 14b is substantially parallel to the optical lens plate 1.

The fixing clip 10 may further include an up-down movement preventing member 16, as shown in FIG. 7 and FIG. 12. The up-down movement preventing member 16 is arranged to surround the leg 12 between the plate 2 and the separation preventing member 14. The up-down movement preventing member 16 serves to prevent the optical lens plate 1 from moving up and down. To this end, the up-down movement preventing member 16 is fixedly arranged at a predetermined height of the leg 12. The up-down movement preventing member 16 may be made of an elastic material.

As mentioned above, the optical lens plate 1 may be easily assembled when it includes the fixing clip 10. Firstly the fixing clip 10 is aligned with the corresponding fixing hole 7. Then the optical lens plate 1 is pressed down so that the fixing clip 10 is inserted into the fixing hole 7, thereby completing assembly.

In another exemplary embodiment, the optical lens plate 1 may have a fixing screw as the plate fixing means. FIG. 8 is a cross-sectional view showing a fixing screw according to an exemplary embodiment of the present invention. A plurality of fixing screws 20 are arranged on a bottom of the plate 2 like table legs. The fixing screw 20 has a spiral portion 22 having a male screw structure. A nut 24 having a female screw structure is provided corresponding to the spiral portion 22 formed on the fixing screw 20. In order to fix the optical lens plate 1, the fixing screw 20 is inserted into the inserting hole 39 formed in a light source substrate 34 (see FIG. 13), and the spiral portion 22 of the fixing screw 20 is coupled with the nut 24.

An up-down movement preventing member 26 may further be arranged on a middle region of the fixing screw 20. The up-down movement preventing member 26 is arranged to surround the fixing screw 20, and it serves to prevent the optical lens plate 1 from moving up and down. To this end, the up-down movement preventing member 26 is fixedly arranged at a predetermined height of the fixing screw 20. The up-down movement preventing member 16 may be made of an elastic material.

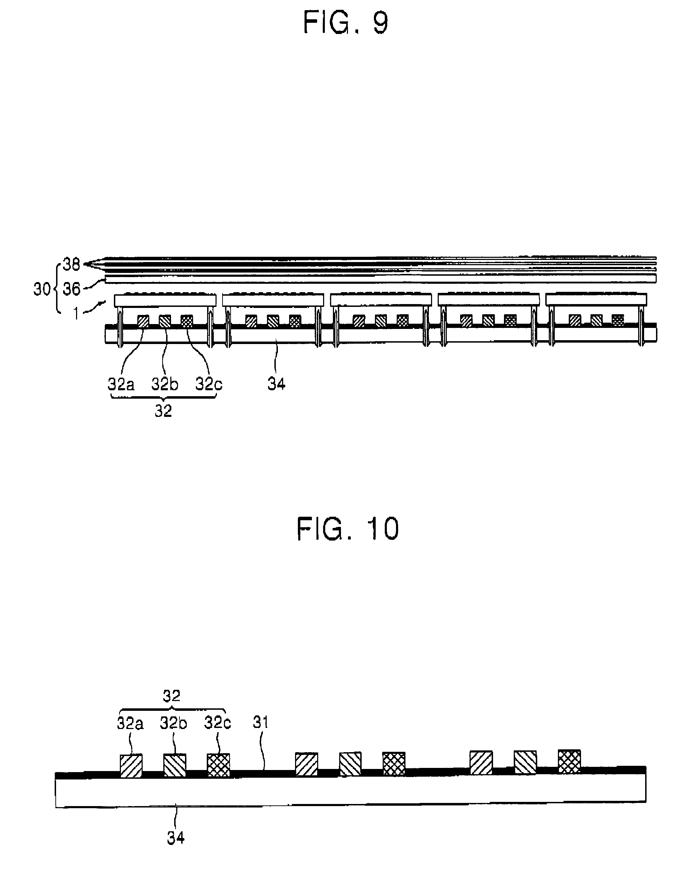

A backlight unit according to an exemplary embodiment of the present invention is described below with reference to FIG. 9, FIG. 10, FIG, 11, FIG. 12, FIG. 13, FIG. 14, and FIG. 15.

FIG. 9 is a cross-sectional view showing a backlight unit according to an exemplary embodiment of the present invention. The backlight unit 30 includes a light source 32, a light source substrate 34, the optical lens plate 1, a diffusing plate 36, and an optical sheet 38.

The light source 32 emits light. Various light sources such as an LED, which is a point light source, and a CCFL, which is a line light source, may be used as the light source 32. In one exemplary embodiment, the point light source is used as the light source 32. Accordingly, an LED is used as the light source 32 and so is labeled as 32 in FIG. 9, FIG. 10, FIG. 11, FIG. 12, FIG. 13, FIG. 14, and FIG. 15. The LED 32 includes a red LED 32a, a green LED 32b, and a blue LED 32c.

The LED 32 may have a configuration in which one LED chip is mounted on one package or a configuration in which a plurality of LED chips are mounted on one package. The LED 32 is mounted on the light source substrate 34 as shown in FIG. 10. FIG. 10 is a cross-sectional view showing the light source substrate 34. Electrical wires (not shown) are arranged on the light source substrate 34 to supply an electrical power to the LED 32. A reflecting member 31 to reflect light emitted from the LED 32 may be further arranged on the light source substrate 34. A printed circuit board ("PCB") or a flexible PCB may be used as the light source substrate 34,

Referring back to FIG. 9, the diffusing plate 36 is arranged above the light source plate 34 to uniformly diffuse light emitted from the LED 32. To this end, the diffusing plate 36 may have a structure to diffuse light and is spaced apart from the light source substrate 34, A diffusing agent may be uniformly dispersed in the diffusing plate 36 to uniformly diffuse light. Alternatively, an optical pattern such as a lenticular lens to diffuse light may be arranged on a top or bottom of the diffusing plate 36.

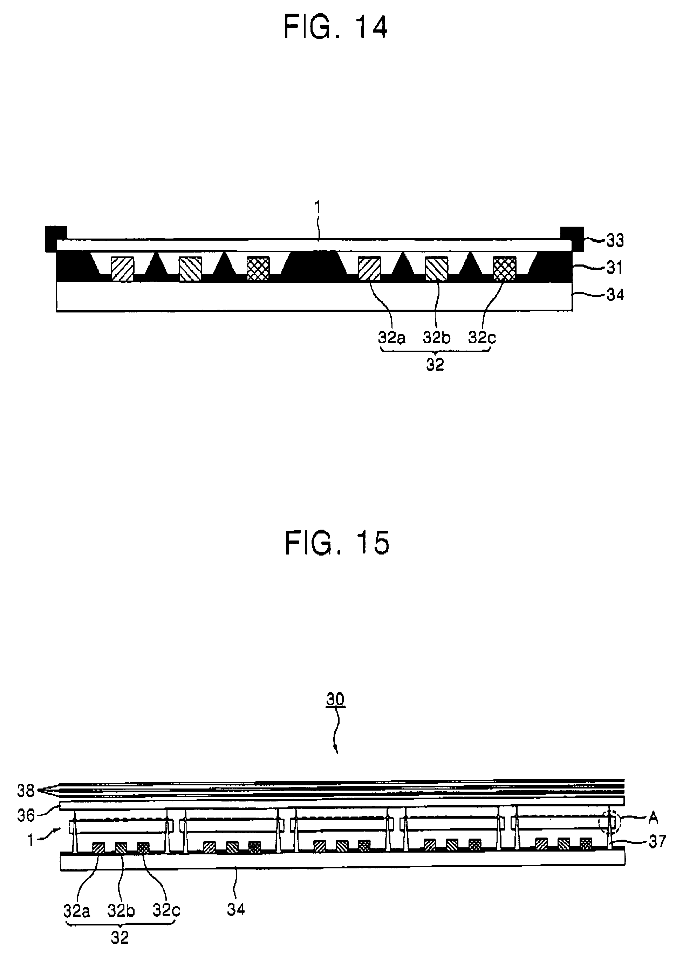

The diffusing plate 36 may be accommodated by a bottom chassis (not shown) arranged above the light source substrate 34. Alternatively, the diffusing plate 36 may be supported by a diffusing plate supporting member (denoted by a reference numeral 37, for example, in FIG. 15) arranged above the light source substrate 34. Such a diffusing plate supporting member may be efficient when it is used for a large display device. In the case of a large display device, all members of the display device, such as the diffusing plate as well as a display panel, may be large. When only edges of the diffusing plate are supported, a central portion of the display panel may bend downward. Thus, a plurality of positions including the central portion as well as the edges of the diffusing plate 36 may need to be supported, A plurality of diffusing plate supporting members may be arranged over the whole portion of the light source substrate 34 to support a plurality of positions of the diffusing plate 36, thereby constantly maintaining a gap between the light source substrate 34 and the diffusing plate 36.

The optical lens plate 1 is arranged between the light source substrate 34 and the diffusing plate 36 to widen the irradiation angle of light emitted from the light source 32. An angle at which light is irradiated from the light source 32 is referred to as the irradiation angle. The larger the irradiation angle, the wider the area is to which light is irradiated, whereas the smaller the irradiation angle, the narrower the area is to which light is irradiated. The optical lens plate I has the same structure as the structure described with reference to FIG. land FIG. 2, and thus, any repetitive description will be omitted.

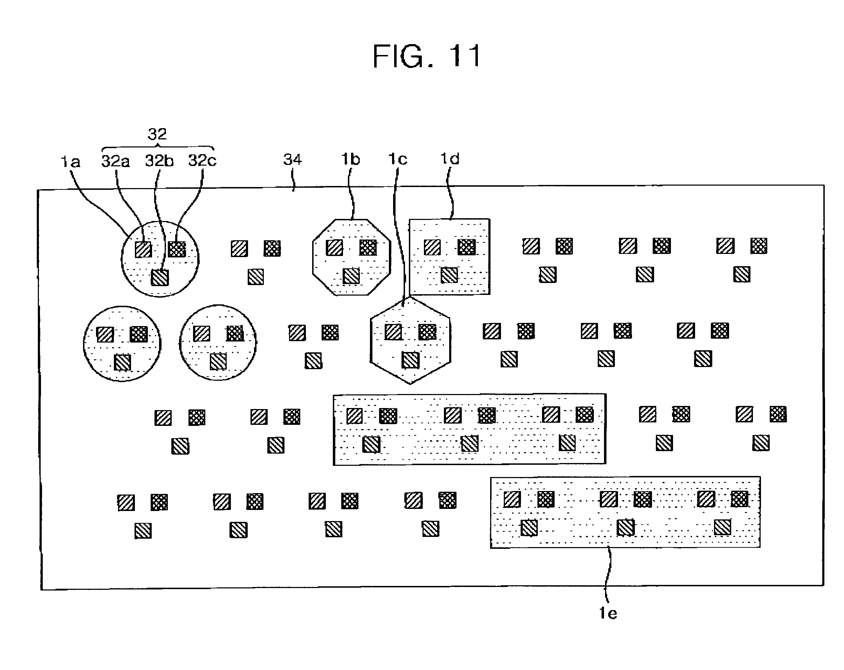

The optical lens plate 1 may be formed of one plate which can cover all the LEDs 32 mounted on the light source substrate 34 like the diffusing plate 36. Alternatively, the optical lens plate 1 may be formed of small plates that each cover some of the LEDs 32 mounted on the light source substrate 34. For example, as shown in FIG. 11, the light source substrate 34 is divided into a plurality of imaginary regions, and a plurality of small optical lens plates 1a, 1b, 1c, 1d, and 1e that can cover the LEDs mounted on the respective imaginary regions may be provided. In a case where a plurality of small optical lens plates is provided, the manufacturing process may be simple and the manufacturing cost may be low as compared to a case where one large optical lens plate is provided. In addition, it may be easy to assemble the small optical lens plate on the light source substrate 34, and it may be easy to constantly maintain a gap between the light source substrate 34 and the optical lens plate 1. Since an optical lens plate 1 occupies a small area, the transformation of the central portion of the optical lens plate due to its hanging down may be avoided.

In particular, when a plurality of LEDs 32 are arranged on the light source substrate 34, the red LED 32a, the green LED 32b, and the blue LED 32c may constitute one LED cluster as shown in FIG. 11. In this instance, a plurality of LED clusters may be arranged on the light source substrate 34, and one small optical lens plate 1a, 1b, 1c, or 1d may be arranged for each LED cluster. Further, a plurality of LED clusters may be covered with one small optical lens plate 1e.

The small optical lens plates 1a, 1b, 1c, 1d, and le may have various forms. For example, each small optical lens plate 1a, 1b, 1c, 1d, and le may have a circular form or a polygonal form as shown in FIG. 11. The shape of the small optical lens plates 1a, 1b, 1c, 1d, and I depends on an LED arrangement structure on the light source substrate 34 and the brightness required by the display device.

A structure for mounting the optical lens plate to the backlight unit is described below with reference to FIG. 12, FIG. 13, FIG. 14, FIG. 15, and FIG. 16.

FIG. 12 is a cross-sectional view showing a structure to mount the optical lens plate 1 having the fixing clip 10 to the light source substrate 34. The fixing clip 10 has the same configuration as the configuration described with reference to FIG. 7, and thus, a repetitive description will be omitted.

When the optical lens plate 1 includes the fixing clip 10, the inserting hole 39 is formed in the light source substrate 34 to fix the optical lens plate 1, The inserting hole 39 is arranged at an appropriate location of the light source substrate 34 so that the optical lens plate 1 can cover the LEDs 32 mounted on the light source substrate 34. In order to couple the optical lens plate 1 to the light source substrate 34, the fixing clip 10 is inserted into the corresponding inserting hole 39. Here, the separation preventing member 14 is exposed at the bottom of the light source substrate 34. The horizontal surface 14b of the separation preventing member 14 is caught by the inserting hole 39, and thereby the fixing clip 10 is not separated from the inserting hole 39.

The up-down movement preventing member 16 is further arranged at a middle portion of the fixing clip 10 in order to keep the height of the optical lens plate 1 constant. The up-down movement preventing member 16 is arranged at a height at which the optical lens plate 1 does not contact the LED 32 when the optical lens plate 1 is fixed to the light source substrate 34. When the optical lens plate 1 is spaced apart from the LED 32, light emitted from the LED 32 passes through an air space and then is refracted and diffused in the inner curved surface 3 of the optical lens 5.

FIG. 13 is a cross-sectional view showing a structure to mount the optical lens plate having the fixing screw to the light source substrate. The fixing screw 20 has the same configuration as the configuration described with reference to FIG. 8, and thus, a duplicated description will be omitted.

When the optical lens plate 1 includes the fixing screw 20, the inserting hole 39 is formed in the light source substrate 34. In order to fix the optical lens plate 1 to the light source substrate 34, the fixing screw 20 may be inserted into the corresponding inserting hole 39, and the spiral portion 22 of the fixing screw 20 is exposed at the bottom of the light source substrate 34. The spiral portion 22 of the fixing screw 20 is coupled with the nut 24 to prevent the fixing screw 20 from being separated from the inserting hole 39. Also, the up-down movement preventing member 26 may be arranged on the middle portion of the fixing screw 20. The up-down movement preventing member 26 fixes the optical lens plate 1 to prevent movement in a column direction such that the fixing screws 20 may be inserted into the inserting holes 39 and coupled with the nut 24.

Here, the optical lens plate 1 is fixed at a height sufficient to be spaced apart from the LED 32 mounted on the light source substrate 34.

FIG. 14 is a cross-sectional view showing a structure in which the optical lens plate directly contacts the light source substrate.

In a case where the optical lens plate 1 directly contacts the light source substrate 34, the optical lens plate 1 may not need any means to fix the optical lens plate 1. Thus, the structure of the optical lens plate may be simple, and it may be easy to fabricate the optical lens plate. In addition, a manufacturing cost of the optical lens plate is low.

In order to fix the optical lens plate 1 such that the optical lens plate 1 directly contacts the light source substrate 34, the LED 32 mounted on the light source substrate 34 may not directly contact the optical lens plate 1. Accordingly, a reflecting member 31 arranged on the light source substrate 34 may be formed with a height lower than the LED 32, The optical lens plate 1 is supported by the reflecting member 31. That is, the optical lens plate 1 may not contact the LED 32 but may directly contact the reflecting member 31. Since a gap exists between the optical lens plate 1 and the LED 32, an air space is formed between the optical lens plate 1 and the LED 32. In another exemplary embodiment, an LED substrate of a chip-onboard ("COB") structure in which the LED 32 is directly mounted on a board may be used to provide the air space between the optical lens plate 1 and the LED 32.

Fixing jigs 33 are further provided to fix the optical lens plate 1 on the light source substrate 34. The fixing jigs 33 are arranged on the edges of the light source substrate 34 to press down and hold both ends of the optical lens plate 1. The fixing jigs 33 may be arranged on a bottom chassis (not shown) other than the light source substrate 34.

As described above, when the optical lens plate 1 lies on the light source substrate 34, there is an advantage in that the structure of the optical lens plate 1 may be simplified and the manufacturing cost of the optical lens plate 1 may be low.

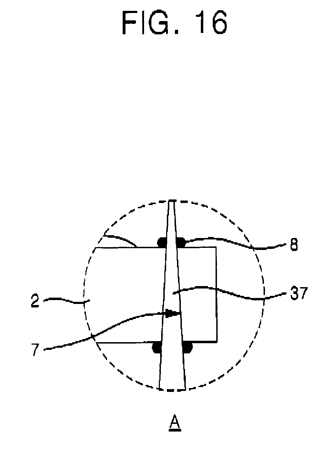

FIG. 15 is a cross-sectional view showing the backlight unit having the optical lens plate fixed by the diffusing plate supporting member, and FIG. 16 is an enlarged view of part 'A' shown in FIG. 15.

Referring to FIG. 15 and FIG. 16, the light source substrate 34 has diffusing plate supporting members 37, and the optical lens plate 1 has corresponding fixing holes 7. A plurality of diffusing plate supporting members 37 is uniformly arranged on the light source substrate 34 to support the diffusing plate 36. The diffusing plate supporting members 37 are arranged in consideration of a location where the optical lens plate 1 is to be arranged. The diffusing plate supporting member 37 may have a cone shape in which the diameter becomes gradually smaller toward the top from the bottom, as shown in FIG. 15, or may have a cylindrical shape.

The diffusing plate supporting members 37 mounted on the light source substrate 34 are aligned with the corresponding fixing holes 7 of the optical lens pate 1. The optical lens plate 1 is fixed by inserting the diffusing plate supporting members 37 into the corresponding fixing hole 7, Here, the up-down movement preventing members 8 are arranged on upper and lower opening portions of the fixing hole 7. The up-down movement preventing members 8 serve to prevent the optical lens plate I fixed by the diffusing plate supporting members 37 from moving up and down.

In this instance, since the diffusing plate supporting members 37 fix the optical lens plate 1, an additional optical lens plate fixing means may not be needed.

Meanwhile, the backlight unit 30 of the present invention may further include an optical sheet 38 above the diffusing plate 36. The optical sheet 38 may include a plurality of sheets, such as a brightness improving film and a protecting film, and may serve to convert light uniformly diffused by the optical lens plate 1 and the diffusing plate 36 into straight light, thereby improving the brightness.

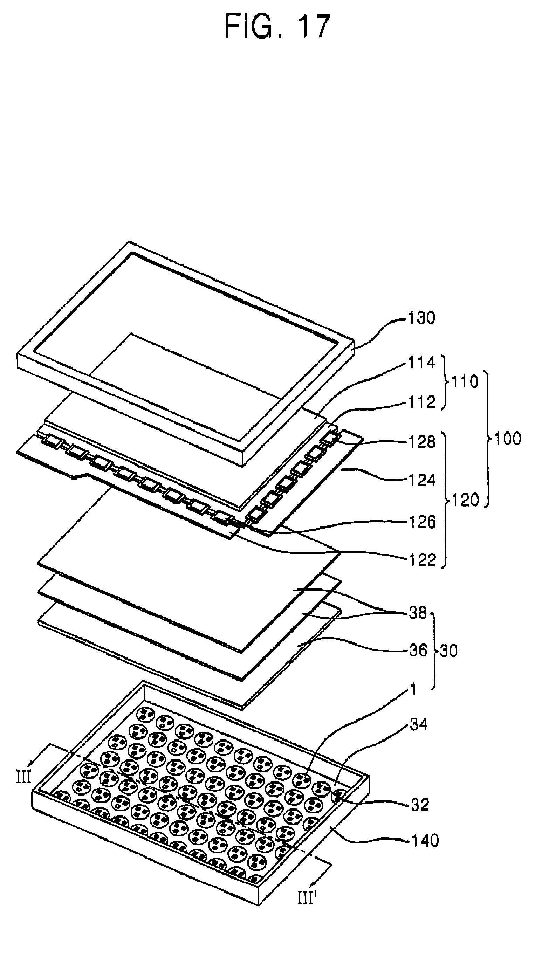

FIG. 17 is an exploded perspective view showing a display device according to an exemplary embodiment of the present invention. The display device includes the backlight unit 30 and a display unit 100.

The backlight unit 30 includes the light source 32, the light source substrate 34, the optical lens plate 1, the diffusing plate 36, and the optical sheet 38 That are accommodated by a backlight unit accommodating container 140. The backlight unit 30 has the same configuration as the configuration described with reference to FIG. 9.

The display unit 100 includes a display panel 110 displaying an image using light supplied from the backlight unit 30 and a driving circuit portion 120 driving the display panel 110.

The display panel 110 includes first and second substrates 112 and 114, and a liquid crystal layer (not shown) interposed the first and second substrates 112 and 114.

The first substrate 112 is a thin film transistor ("TFT") substrate in which TFTs are arranged in a matrix form. The first substrate 112 may be made of glass. Each TFT includes a gate electrode connected to a gate line, a source electrode connected to a data line, and a drain electrode connected to a pixel electrode, which may be made of a transparent conductive material.

The second substrate 114 is a color filter substrate in which red (R), green (G), and blue (B) pixels for realizing various colors are arranged. The R, G, and B pixels are defined by a black matrix pattern. The second substrate 114 may be made of glass, A common electrode made of a transparent conductive material is formed on the second substrate 114,

In the display panel 110 having the above-described structure, when an electrical power is applied to the gate electrode of the TFT to turn on the TFT, an electric field forms between the pixel electrode and the common electrode. At this time, the orientation of liquid crystal molecules interposed between the first and second substrates 112 and 114 changes according to the electric field and as a result, the transmittivity of light supplied from the backlight unit is varied according to the orientation change of the liquid crystal molecules, thereby displaying an image of desired gradations.

The driving circuit portion 120 includes a data PCB 122 to supply a data driving signal to the display panel 110, a gate PCB 124 to supply a gate driving signal to the display panel 110, a data driving circuit film 126 to connect the data PCB 122 to the display panel 110, and a gate driving circuit film 128 to connect the gate PCB 124 to the display panel 110. The data driving circuit film 126 and the gate driving circuit film 128 may include a tape carrier package ("TCP") or a chip-on-film ("COF"). Meanwhile, the gate PCB 124 may be removed by forming another signal line on the display panel 110 and the gate driving circuit film 128,

The display device further includes a top chassis 130 to fix the display unit 100. The top chassis 130 is coupled to the backlight unit accommodating container 140 to hold the edges of the display panel 110, At this time, the data PCB 122 may be bent by the data driving circuit film 126 so that the data PCB 122 is fixed to the side or bottom of the backlight unit accommodating container 140. The top chassis 130 may be made of metal that rarely transforms and has excellent strength.

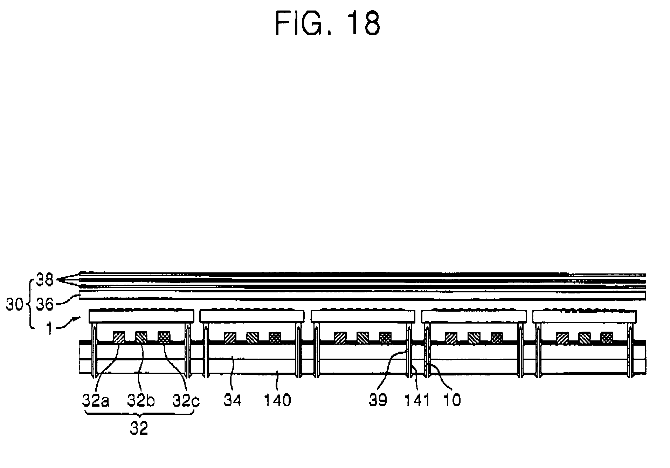

FIG. 18 is a is a cross-sectional view taken along line III - III' of FIG. 17.

As shown in FIG. 18, the fixing clip 10 may be inserted into the inserting hole 39 of the light source substrate 34 and an inserting hole 141 of the bottom chassis 140 for fixing the optical lens plate 1 to the light source substrate 34 and the bottom chassis 140. The fixing screw 20 as shown in FIG. 13 may be sued instead of the fixing clip 10.

As described above, the optical lens plate of the present invention may have a small plate structure, and thus, it may be easy to fabricate and assemble.

Also, the irradiation angle of the LED may be widened by the optical lens plate, and thus, the thickness of the backlight unit may be reduced.

In addition, as the thickness of the backlight unit is reduced, the thickness of the display device may also be reduced.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. An optical lens plate, comprising:
a transparent plate;
a plurality of optical lenses, each optical lens having an inner curved surface formed in a lower portion of the plate and an outer curved surface formed in an upper portion of the plate,
wherein light enters the lens through the inner curved surface and is emitted from the outer curved surface; and
a plate fixing means which fixes the plate to a supporting member.

2. The optical lens plate of claim 1, wherein the inner and outer curved surfaces are ellipse-shaped and a major axis of the inner curved surface is substantially perpendicular to a major axis of the outer curved surface.

3. The optical lens plate of claim 2, wherein the major axis of the inner curved surface is substantially perpendicular to the optical lens plate and the major axis of the outer curved surface is substantially parallel to the optical lens plate.

4. The optical lens plate of claim 2, wherein the plate fixing means is comprised of a plurality of fixing holes that penetrate the optical lens plate.

5. The optical lens plate of claim 4, further comprising an up-down movement preventing member having a ring shape on at least one of an upper opening portion and a lower opening portion of the fixing hole.

6. The optical lens plate of claim 4, wherein the plate fixing means comprises a fixing clip arranged on a bottom of the optical lens plate.

7. The optical lens plate of claim 6, wherein the fixing clip comprises a leg branched into at least two portions and a separation preventing member formed at an end of the leg.

8. The optical lens plate of claim 7, further comprising an up-down movement preventing member arranged between the optical lens plate and the separation preventing member to prevent the optical lens plate from moving up and down.

9. A backlight unit, comprising:
a light source substrate;
a plurality of light sources disposed on the light source substrate;
a diffusing plate arranged above the light source substrate to diffuse light emitted from the light sources;
an optical lens plate arranged between the light source substrate and the diffusing plate, the optical lens plate comprising a plurality of optical lenses, each optical lens having an inner curved surface to which light emitted from the light source is input and an outer curved surface from which light is output; and
a plate fixing means which fixes the plate to a supporting member.

10. The backlight unit of claim 9, wherein the inner and outer curved surfaces are ellipse-shaped and a major axis of the inner curved surface is substantially perpendicular to a major axis of the outer curved surface.

11. The backlight unit of claim 10, wherein the major axis of the inner curved surface is substantially perpendicular to the optical lens plate and the major axis of the outer curved surface is substantially parallel to the optical lens plate.

12. The backlight unit of claim 11, wherein the light source is a light emitting diode ("LED").

13. The backlight unit of claim 12, wherein the optical lens plate comprises a plurality of small optical lens plates and each small optical lens plate covers a portion of the light sources,

14. The backlight unit of claim 13, wherein the light source comprises a red LED, a green LED, and a blue LED that constitute one LED cluster, and the small optical lens plate covers at least one LED cluster.

15. The backlight unit of claim 13, wherein the plate fixing means comprises a fixing jig provided in the light source substrate, which comes in contact with the small optical lens plate and fixes both ends of the small optical lens plate.

16. The backlight unit of claim 15, further comprising a reflecting member arranged between the light source substrate and the LED, the reflecting member having a lower height than the height of the LED.

17. The backlight unit of claim 13, further comprising a diffusing plate supporting member arranged between the light source substrate and the diffusing plate to maintain a gap between the diffusing plate and the light source substrate, wherein the plate fixing means comprises a fixing hole into which the diffusing plate supporting member is inserted, , and the small optical lens plate is fixed at a middle of the diffusing plate supporting member such that the diffusing plate supporting member is inserted into the fixing hole.

18. The backlight unit of claim 17, further comprising an elastic member is arranged on at least one of an upper opening portion and a lower opening portion of the fixing hole, the elastic member to prevent the small optical lens plate from moving up and down.

19. The backlight unit of claim 15, wherein the plate fixing means comprises a fixing clip formed on the plate fixing means, and a clip hole into which the fixing clip is inserted.

20. The backlight unit of claim 19, wherein the fixing clip is attached to a bottom of the small optical lens plate, the fixing clip comprising a leg branched into at least two portions and a separation preventing member formed at an end of the leg,
wherein the leg is made of an elastic material, and the separation preventing member has downwardly oblique surface and horizontal surface formed at a top of the oblique surface.

21. The backlight unit of claim 20, further comprising an up-down movement preventing member arranged between the optical lens plate and the separation preventing member to prevent the optical lens plate from moving up and down.

22. A display device, comprising:
a backlight unit comprising:
a light source substrate;
a plurality of light sources disposed on the light source substrate,
a diffusing plate arranged above the light source substrate to diffuse light emitted from the light sources; an optical lens plate arranged between the light source substrate and the diffusing plate to widen an irradiation angle, the optical lens comprising a plurality of optical lenses, each optical lens plate having an inner curved surface to which light emitted from the light source is input and an outer curved surface from which light is output, and,
a plate fixing means which fixes the optical lens plate to the light source substrate; and
a display panel to display an image using light supplied from the backlight unit;
wherein the inner curved surface and the outer curved surface are each ellipse-shaped, and a major axis of the inner curved surface is substantially perpendicular to a major axis of the outer curved surface.

23. The display device of claim 22, wherein the light source is a light emitting diode ("LED").

24. The display device of claim 23, wherein the optical lens plate comprises a plurality of small optical lens plates and each small optical lens plate covers a portion of the light sources.

25. The display device of claim 24, wherein the plate fixing means includes a fixing clip formed in the small optical lens plate, and a clip hole coupled with the fixing clip which is formed in the light source substrate.
